# EUROPEAN PATENT SPECIFICATION

(11) **EP 3 978 421 B1**
(45) Date of publication and mention of the grant of the patent: **09.08.2023**
(21) Application number: 21200573.0
(22) Date of filing: 01.10.2021
(51) Int. Cl.: B66F 9/10, B60P 3/00, B66F 9/12, B66F 9/18, B66F 11/04

(54) **SELF-PROPELLED VEHICLE FOR HANDLING PACKS OF GLASS SHEETS**
SELBSTFAHRENDES FAHRZEUG ZUM HANDHABEN VON GLASSCHEIBENPAKETEN
VÉHICULE AUTOPROPULSÉ POUR LA MANUTENTION DE PAQUETS DE FEUILLES DE VERRE

(30) Priority: 01.10.2020 IT 202000023173
(43) Date of publication of application: 06.04.2022
(73) Proprietor: ITALCARRELLI S.p.A., 36072 Chiampo (VI) (IT)
(72) Inventor: NEGRIN, Alessandro, 36072 CHIAMPO (VI) (IT)
(74) Representative: Bellemo, Matteo

(56) References cited:
- DE-U1- 20 301 165
- FR-A1- 2 466 586
- IT-A1- TV20 130 143
- KR-B1- 101 035 478

## Description

### CROSS-REFERENCE TO RELATED APPLICATIONS

This Patent Application claims priority from Italian Patent Application No. 102020000023173 filed on October 1st, 2020.

### TECHNICAL FIELD

The present invention relates to a self-propelled vehicle for handling packs of glass sheets.

More specifically, the present invention relates to a self-propelled vehicle for handling and rotating in situ packs of rectangular glass sheets of large dimensions, to which the following disclosure will explicitly refer without thereby losing generality.

### STATE OF THE PRIOR ART

As is known, large packs of glass sheets are generally stored inside storehouses in a substantially vertical position, resting on specific glass-sheet supporting racks.

In order to better exploit the space available, the packs of glass sheets are further arranged on the glass-sheet supporting racks with the larger sides in a vertical position.

Clearly, this requirement implies the availability of a self-propelled vehicle for handling packs of glass sheets, which is also capable, when required, of rotating the pack of glass sheets before resting it on the glass-sheet supporting rack, so as to arrange the larger sides of the pack in vertical position.

The self-propelled vehicles that are used for handling and rotating on command the large packs of glass sheets generally comprise: a substantially horseshoe-shaped, rigid supporting body which is provided with four ground-resting wheels; a horizontal slide, which is located astride the two rectilinear prongs of the body, and is capable of moving horizontally along the two prongs of the body parallel to the vehicle longitudinal axis, between a forward position in which the slide is located flush with the front edge of the supporting body, and a rearward position in which the slide is located approximately in the centre of the body; a vertical upright that rises cantilevered from the horizontal slide in a substantially vertical direction; and a gripping equipment which is fixed to the vertical upright so as to protrude cantilevered from the front part of the body, and is capable of moving along the vertical upright parallel to the upright longitudinal axis.

The gripping equipment is structured so as to be able to firmly grasp and hold a pack of glass sheets in a substantially vertical position, and is additionally also capable of rotating, on command, the pack of glass sheets about an axis approximately barycentric and perpendicular to the lying plane of the glass sheets. Such self-propelled vehicles are known e.g. from IT TV20 130 143 A1 or DE 203 01 165 U1.

In this type of self-propelled vehicles, the driver's cabin has a basket structure and is usually located on the top of the gripping equipment, so as to allow the driver of the vehicle to see up close the pack of glass sheets during the gripping, lifting and rotation operations thereof.

Clearly, the raised position of the driver's cabin does not offer an optimal view of all the points of the vehicle, with the driving problems that this entails.

During the manoeuvres for drawing close to and/or gripping the pack of glass sheets, in fact, the gripping equipment hides from view the front part of the supporting body, thus often causing the driver of the vehicle to be obliged to dangerously lean out of the driver's cabin in order to see beyond the gripping equipment.

### OBJECT OF THE INVENTION

Aim of the present invention is to overcome the operating limits deriving from the raised position of the driver's cabin of the vehicle.

In accordance with these aims, according to the present invention there is provided a self-propelled vehicle for handling packs of glass sheets as defined in Claim 1 and preferably, though not necessarily, in any one of the claims dependent thereon.

### BRIEF DESCRIPTION OF THE DRAWINGS

The present invention will now be described with reference to the accompanying drawings, which illustrate a non-limiting example embodiment thereof, wherein:
- Figure 1 is a perspective view of a self-propelled vehicle for handling packs of glass sheets realized according to the teachings of the present invention, with parts removed for clarity's sake;
- Figure 2 is a second perspective view of the self-propelled vehicle illustrated in Figure 1, from a different angle and with parts removed for clarity's sake;
- Figure 3 is a perspective view, on an enlarged scale, of the upper movable section of the self-propelled vehicle illustrated in the previous figures, in a second operating configuration and with parts removed for clarity's sake;
- Figure 4 is a perspective view, on an enlarged scale, of the gripping equipment of the self-propelled vehicle illustrated in the previous figures, with parts removed for clarity's sake;
- Figure 5 is a perspective view, on an enlarged scale, of the driver's cabin of the self-propelled vehicle illustrated in Figures 1, 2 and 3, with parts removed for clarity's sake; whereas
- Figures 6 and 7 are two perspective views of the driver's cabin illustrated in Figure 5, in the two operating configurations and with parts removed for clarity's sake.

### PREFERRED EMBODIMENT OF THE INVENTION

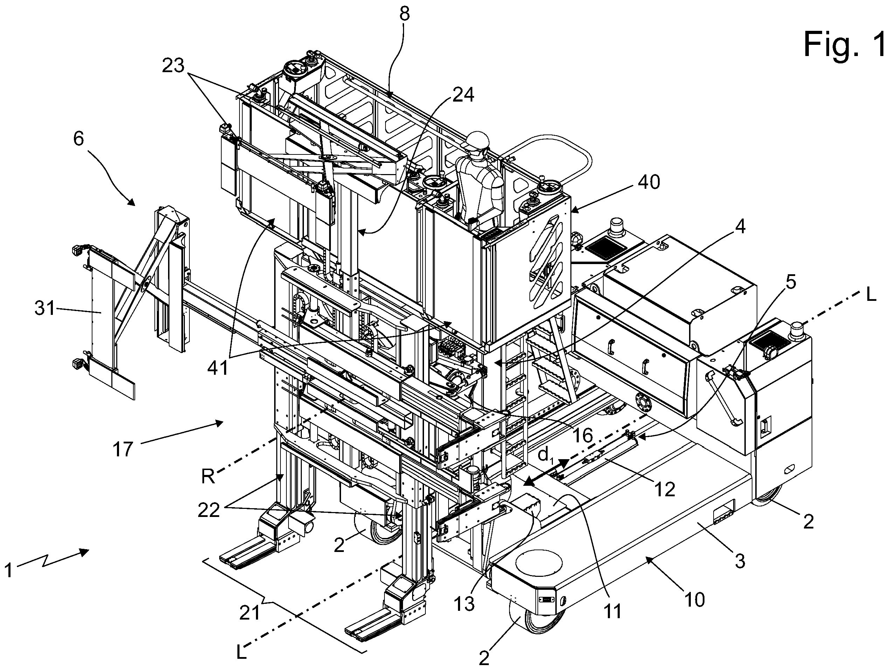

With reference to Figures 1, 2 and 3, reference number 1 denotes, as a whole, a self-propelled vehicle specifically structured for handling, inside a general shed, warehouse, plant or other work area, large packs of glass sheets substantially rectangular in shape, arranged in a substantially vertical position.

In other words, the self-propelled vehicle 1 is structured so as to be able to fork, lift, horizontally move and finally rest again onto the ground, or onto a general glass-sheet supporting rack, a pack of glass sheets arranged in a substantially vertical position.

Preferably, the self-propelled vehicle 1 is moreover structured so as to be able to rotate, on command, the pack of glass sheets about an axis approximately barycentric and substantially perpendicular to the lying plane of the pack of glass sheets.

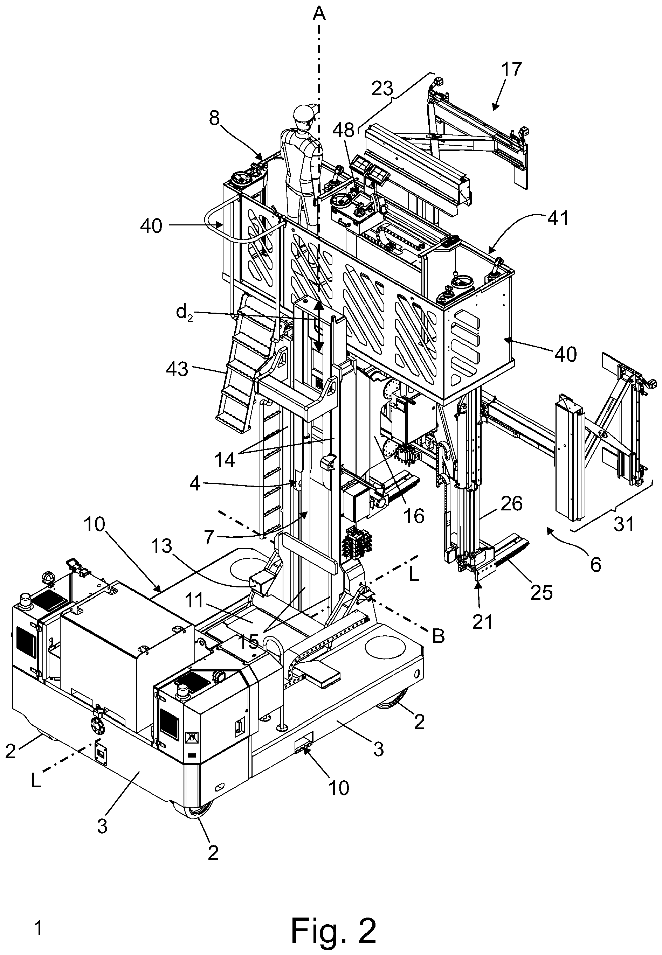

With reference to Figures 1 and 2, the self-propelled vehicle 1 is provided with a plurality of preferably driving and/or steering ground-resting wheels 2, and comprises: a rigid supporting body 3 that rests on the ground by means of the wheels 2; a substantially rectilinear, vertical upright 4 that extends cantilevered from the supporting body 3 in a substantially vertical direction, and is firmly fixed to the supporting body 3 with the capability of moving on the same supporting body 3 horizontally and parallel to the vehicle longitudinal axis L, preferably while always remaining substantially parallel to itself; and a preferably hydraulically-operated, first actuator device 5 that is capable of moving, on command, the vertical upright 4 forwards and backwards on supporting body 3.

More specifically, the vertical upright 4 is firmly fixed to the supporting body 3 with the capability of freely moving, on supporting body 3, in a direction d₁ substantially horizontal and parallel to the vehicle longitudinal axis L.

The actuator device 5, in turn, is preferably adapted to move, on command, the vertical upright 4 forwards and backwards on supporting body 3 in direction d₁, between a forward position (see Figures 1 and 2) in which the vertical upright 4 is located at the front edge of supporting body 3; and a rearward position (not visible in the figures) in which the vertical upright 4 is located approximately in the centre of supporting body 3.

Additionally, the self-propelled vehicle 1 also comprises: a front gripping equipment 6 which is structured so as to grasp and hold, on command, a pack of glass sheets, and is fixed to the vertical upright 4 with the capability of moving on vertical upright 4 parallel to the longitudinal axis A of the latter; and a preferably hydraulically-operated, second actuator device 7 that is capable of moving, on command, the gripping equipment 6 along the vertical upright 4, so as to be able to vary at will the height of the gripping equipment 6 from the ground.

More specifically, the gripping equipment 6 is fixed to the vertical upright 4 so as to protrude cantilevered from the front part of the self-propelled vehicle 1, or rather of supporting body 3, when the vertical upright 4 is in the forward position (see Figures 1 and 2).

Additionally, the gripping equipment 6 is mounted in slidable manner on the vertical upright 4 so as to be able to move up and down on the vertical upright 4 in a direction d₂ substantially parallel to the upright longitudinal axis A, preferably substantially for the entire height/length of the same upright.

The actuator device 7, on the other hand, is preferably adapted to move the gripping equipment 6 along the vertical upright 4, between a first operating position (see Figure 1) in which the gripping equipment 6 is substantially at the base of the vertical upright 4, at the minimum possible distance from the ground; and a second operating position (see Figure 2) in which the gripping equipment 6 is substantially at the top of the vertical upright 4, at the maximum possible distance from the ground.

Clearly, actuator device 7 is preferably also capable of arranging the gripping equipment 6 on the vertical upright 4, in any intermediate position between the first and the second operating positions.

With reference to Figures 1, 2 and 3, the self-propelled vehicle 1 is moreover provided with a raised driver's cabin 8 which is adapted to accommodate the driver of the vehicle, i.e. the person in charge of driving the self-propelled vehicle 1, and is mounted movable on the vertical upright 4 immediately above the gripping equipment 6.

Preferably, the driver's cabin 8 is furthermore fixed in rigid manner directly to the underlying gripping equipment 6, so as to be supported by the gripping equipment 6 and be able to move vertically along the vertical upright 4 together with the latter.

In other words, the driver's cabin 8 accommodates the steering wheel and the other vehicle drive and command members necessary for driving the vehicle, and is preferably firmly fixed to the top of the gripping equipment 6.

Clearly, the steering wheel and the other vehicle drive and command members are manually operated.

With reference to Figures 1, 2 and 3, preferably the supporting body 3 furthermore has a substantially horseshoe-shaped structure.

In other words, the front part of supporting body 3 is preferably provided with two rectilinear and protruding longitudinal beams 10 that extend cantilevered substantially parallel to the ground, one spaced alongside the other on opposite sides of and substantially parallel to the vehicle longitudinal axis L. Preferably, the two longitudinal beams or prongs 10 are furthermore arranged in a substantially specular position, on opposite sides of the vertical midplane of the vehicle.

Preferably, the supporting body 3 furthermore rests on the ground by means of a plurality of pivoting ground-resting wheels 2 that are arranged in pairs on opposite sides of the vehicle longitudinal axis L, preferably in a substantially specular position on opposite sides with respect to the vertical midplane of the vehicle.

More specifically, the self-propelled vehicle 1 is preferably provided with a first pair of preferably idle and pivoting, ground-resting wheels 2 which are located at the front/distal ends of the two longitudinal beams 10 of supporting body 3; and/or with a second pair of preferably driving and pivoting, ground-resting wheels 2 which, in turn, are located at the rear part of supporting body 3.

Preferably, the two wheels 2 of the second pair of ground-resting wheels 2 are furthermore each driven into rotation by a respective electric or hydraulic engine (not illustrated).

With reference to Figures 1, 2 and 3, additionally the vertical upright 4 is preferably butt fixed on a horizontal slide 11, which is located between the two longitudinal beams 10 and is fixed in slidable manner to both longitudinal beams 10 so as to be able to move along the two beams parallel to the vehicle longitudinal axis L, i.e. in direction d₁.

The actuator device 5, in turn, preferably comprises at least one double-acting hydraulic cylinder 12 that extends parallel to the vehicle longitudinal axis L, i.e. in direction d₁, preferably inside the rectilinear slit laterally delimited by the two longitudinal beams 10, and has the two ends fixed one to the supporting body 3 and the other to the slide 11, so as to be able to move the slide 11 forwards and backwards along the two longitudinal beams 10.

More specifically, the actuator device 5, or rather the hydraulic cylinder 12, is preferably capable of moving the horizontal slide 11 along the two longitudinal beams 10, between a forward position (see Figures 1 and 2) in which the horizontal slide 11 is located at the front end of the rectilinear slit delimited by the two longitudinal beams 10, i.e. at the front/distal ends of the two longitudinal beams 10; and a rearward position in which the horizontal slide 11 is located at the rear end of the same slit.

Clearly, the hydraulic cylinder(s) 12 may be replaced, for example, by pneumatic cylinders or by electrically-operated linear actuators .

With particular reference to Figures 1, 2 and 3, the vertical upright 4, on the other hand, is preferably located astride of the vehicle longitudinal axis L and of the vertical midplane of the vehicle, and is preferably pivotally joined to the horizontal slide 11 so as to be able to rotate about a transversal reference axis B, which is substantially perpendicular to the upright longitudinal axis A, i.e. substantially horizontal, and is furthermore substantially perpendicular to the vehicle longitudinal axis L.

In other words, transversal axis B is substantially perpendicular to the vertical midplane of the vehicle.

Preferably, the self-propelled vehicle 1 is moreover provided with a preferably electrically- or hydraulically-operated, adjustment assembly 13 which is interposed between the horizontal slide 11 and the vertical upright 4, and is capable of rotating, on command, the vertical upright 4 by a few degrees about transversal axis B, so as to vary/adjust the inclination angle of the vertical upright 4 with respect to the vertical.

Additionally, with particular reference to Figure 2, the vertical upright 4 preferably has a lattice structure comprising a pair of rectilinear rods 14 that extends one spaced alongside the other, on opposite sides of and parallel to the upright longitudinal axis A, i.e. in direction d₂, and have a length preferably higher than 2 m (metres). Preferably, the two rectilinear rods 14 are furthermore arranged in a substantially specular position, on opposite sides of the vertical midplane of the vehicle.

The gripping equipment 6 is preferably fixed in axially slidable manner to the two rectilinear rods 14 of vertical upright 4.

The actuator device 7, in turn, preferably comprises two single-acting or double-acting hydraulic cylinders 15, which extend parallel to the upright longitudinal axis A, i.e. in direction d₂, on opposite sides of the upright longitudinal axis A, preferably in the oblong space laterally delimited by the two rectilinear rods 14 of the lattice structure.

Preferably, each hydraulic cylinder 15 furthermore has the outer tubular barrel fixed in rigid manner to the base of the vertical upright 4, and the free/distal end of the movable piston-rod fixed in rigid manner to the gripping equipment 6.

The gripping equipment 6 thus moves along the two rectilinear rods 14 of the vertical upright 4 together with the piston-rod piston-rods of the two hydraulic cylinders 15.

With reference to Figures 1, 2, 3 and 4, the front gripping equipment 6, in turn, is preferably arranged astride of the vertical midplane of the vehicle, and is structured so as to grasp and firmly hold, on command, to a pack of glass sheets preferably while gripping at least two opposite lateral edges of the pack of glass sheets.

Preferably, the gripping equipment 6 is moreover structured so as to be able to rotate, on command, the pack of glass sheets about a reference axis substantially perpendicular to the upright longitudinal axis A, i.e. substantially horizontal, and preferably also substantially parallel to the vehicle longitudinal axis L.

More specifically, the gripping equipment 6 is adapted to rotate, on command, the pack of glass sheets by approximately 90° about said reference axis, so as to change, when required, the spatial orientation of the pack of glass sheets. Preferably, such reference axis is furthermore at a short distance from or intersects the barycentre of the pack of glass sheets.

With reference to Figures 2, 3 and 4, the gripping equipment 6 in particular comprises: a vertical slide 16 that is fixed to the vertical upright 4, or rather to the two rectilinear rods 14 of vertical upright 4, with the capability of freely moving on vertical upright 4 parallel to the upright longitudinal axis A, i.e. in direction d₂; and a preferably electrically- or hydraulically- operated, gripping assembly 17 that is fixed to/mounted on the vertical slide 16 so as to move on the vertical upright 4 together with the vertical slide 16.

The gripping assembly 17 is moreover fixed to/mounted on the vertical slide 16 so as to protrude cantilevered from the vertical upright 4 at the front of the latter, and is structured so as to grasp and firmly hold, on command, a pack of glass sheets in a substantially vertical position, preferably while gripping at least two opposite lateral edges of the pack.

Clearly, the actuator device 7 is adapted to move the vertical slide 16 along the vertical upright 4.

Additionally, the gripping assembly 17 is preferably also fixed to slide 16 with the capability of freely rotating about a reference axis R substantially perpendicular to the upright longitudinal axis A, i.e. substantially horizontal, and substantially parallel to the vehicle longitudinal axis L.

Preferably, the gripping equipment 6 is moreover also provided with a preferably electrically- or hydraulically-operated, third actuator device (not visible in the figures) which is capable of rotating, on command, the gripping assembly 17 with respect to vertical slide 16, about the axis R.

More specifically, the third actuator device is adapted to rotate, on command, the gripping assembly 17 about axis R by approximately 90° in a clockwise and/or anticlockwise direction, and then preferably to bring the gripping assembly 17 back into the initial position.

Clearly, rotation of gripping assembly 17 about axis R entails a rotation of the pack of glass sheets about the same axis.

With reference to Figures 2, 3 and 4, in the example shown, moreover, the gripping assembly 17 is preferably firmly fixed to the vertical slide 16 via the interposition of a swivelling movable structure.

More specifically, in the example shown the gripping equipment 6 preferably also comprises: an auxiliary horizontal slide (not visible in the figures) which is firmly fixed to slide 16 with the capability of sliding on the same slide 16 in a horizontal direction substantially perpendicular to the longitudinal axis A of vertical upright 4 and substantially perpendicular to the vehicle longitudinal axis L; and a preferably electrically- or hydraulically-operated, first adjustment assembly (not visible in the figures) which is interposed between the vertical slide 16 and the auxiliary horizontal slide, and is capable of varying, on command, the position of the auxiliary horizontal slide on the vertical slide 16.

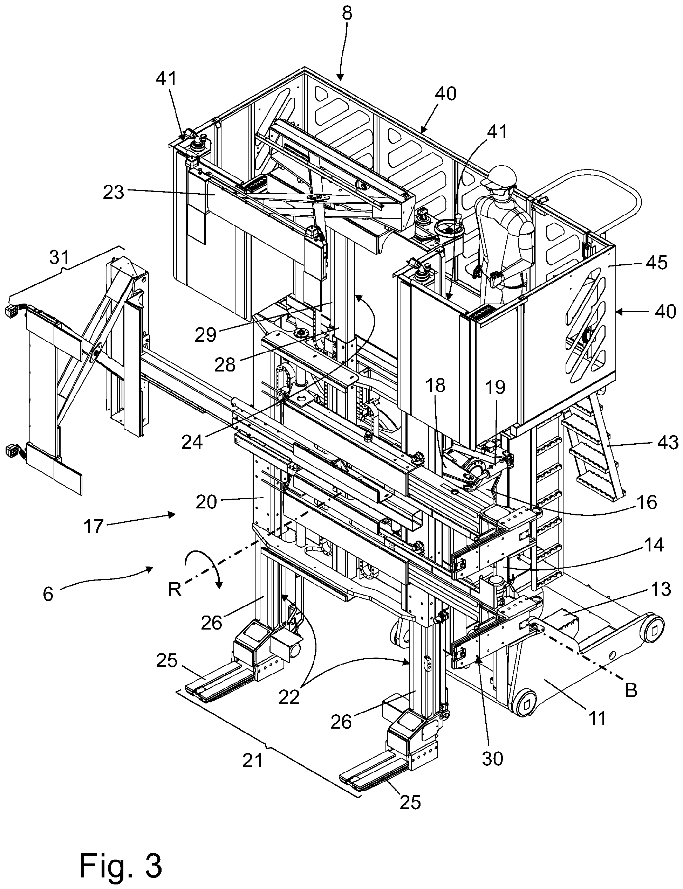

Additionally, the gripping equipment 6 preferably also comprises: a rigid and preferably also substantially plate-like, intermediate swivelling interface 18 (only partially visible in Figure 3) which is firmly fixed to the auxiliary horizontal slide with the capability of swivelling with respect to the latter about a reference axis substantially parallel to the longitudinal axis A of vertical upright 4, i.e. substantially vertical; and a preferably electrically- or hydraulically- operated, second adjustment assembly 19 (only partially visible in Figure 3) which is interposed between the auxiliary horizontal slide and the intermediate swivelling interface 18, and is capable of rotating, on command, the intermediate swivelling interface 18 by a few degrees about the swivel axis, so as to be able to vary, on command, the angular position of the intermediate swivelling interface 18 with respect to the auxiliary horizontal slide and, consequently, with respect to the vertical slide 16 and to the vertical upright 4.

The gripping assembly 17, in turn, is preferably firmly fixed to the intermediate swivelling interface 18 of gripping equipment 6 with the capability of freely rotating about an axis R that is preferably locally substantially perpendicular to the swivel axis of intermediate swivelling interface 18.

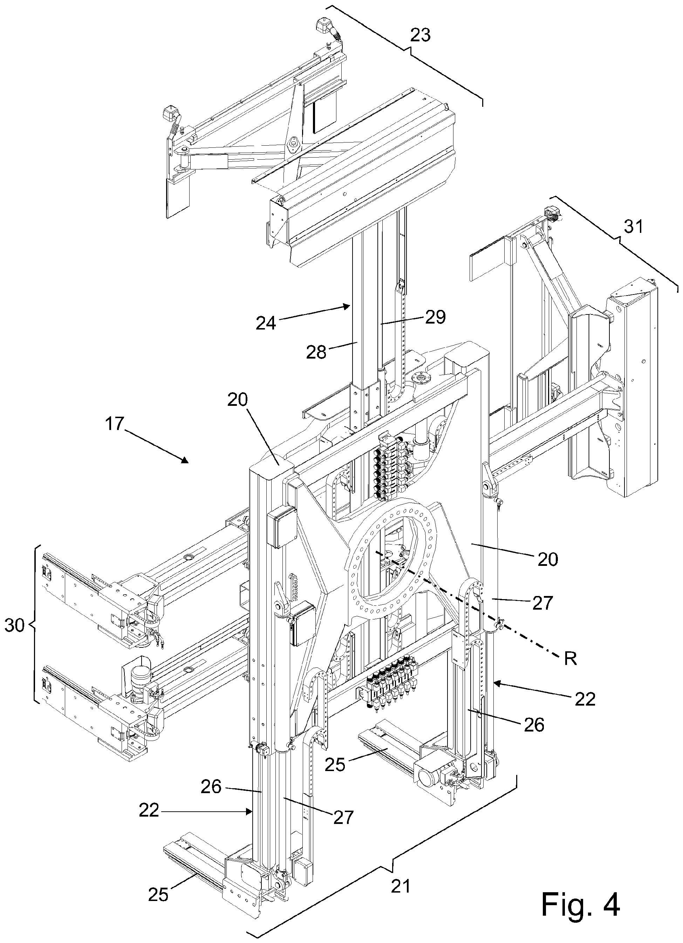

More specifically, with reference to Figures 3 and 4, the gripping assembly 17 of gripping equipment 6 preferably comprises a rigid and preferably substantially rectangular-shaped, central plate-like element 20 which is fixed to the vertical slide 16 so as to extend substantially flush with and parallel to the vertical upright 4, and in use is adapted to be arranged facing and flush with one of the two larger faces of the pack of glass sheets to be handled.

Preferably, the central plate-like element 20 is moreover substantially perpendicular to the rotation axis R of gripping assembly 17 and is firmly fixed to slide 16 with the capability of rotating about the same rotation axis R. The actuator device of gripping equipment 6 is thus adapted to rotate, on command, the plate-like element 20 about the axis R.

More specifically, in the example shown, the central plate-like element 20 is preferably fixed to the intermediate swivelling interface 18 of gripping equipment 6 with the capability of freely rotating about the axis R.

Furthermore, with reference to Figures 1, 2, 3 and 4, the gripping assembly 17 preferably also comprises: a fork-like structure 21 which is arranged spaced beneath the central plate-like element 20 so as to be inserted/insertable beneath the lower horizontal side of the pack of glass sheets to be handled, and is connected in rigid manner to the central plate-like element 20 by means of a rigid oblong framework 22 preferably adjustable in length; and a preferably electrically- or hydraulically-operated, clamp-like gripping member 23 which is arranged spaced above the central plate-like element 20, vertically aligned to the fork-like structure 21, so as to clamp, on command, the upper horizontal side of the pack of glass sheets to be handled, and is connected in rigid manner to the central plate-like element 20 by means of a second oblong rigid framework 24 preferably adjustable in length.

In other words, the gripping assembly 17 is preferably provided with a fork-like structure 21 and a clamp-like gripping member 23 that are arranged on opposite sides of the central plate-like element 20, substantially coplanar and vertically aligned to one another, and are fixed in rigid manner to the central plate-like element 20, so as to be able to move in the space together with the latter.

Preferably, the distance of the fork-like structure 21 from the central plate-like element 20 and the distance of the clamp-like gripping member 23 from the central plate-like element 20 are moreover adjustable at will.

In the example shown, in particular, the lower fork-like structure 21 preferably comprises two rectilinear prongs 25 parallel and alongside to one another, which extend parallel to the vehicle longitudinal axis L, preferably in a substantially specular position on opposite sides of the vertical midplane of the vehicle.

Preferably, the two rectilinear prongs 25 of fork-like structure 21 are moreover separately connected to the central plate-like element 20.

More specifically, each rectilinear prong 25 is preferably rigidly fixed to the end of a corresponding rectilinear beam 26 that extends parallel to the longitudinal axis A of the vertical upright 4, i.e. vertically, and is inserted in a telescopic manner in the central plate-like element 20.

In addition to the two rectilinear beams 26, the oblong rigid framework 22 preferably also comprises two electrically- or hydraulically- operated, linear actuators 27 that are preferably arranged each adjacent and parallel to a respective rectilinear beam 26. Each linear actuator 27 is interposed between the central plate-like element 20 and a rectilinear beam 26, and is capable of axially moving the rectilinear beam 26, so as to vary at will the length of the segment of rectilinear beam 26 protruding cantilevered below the central plate-like element 20.

The clamp-like gripping member 23, on the other hand, is preferably arranged astride of the vertical midplane of the vehicle, and is preferably firmly fixed to the end of a rectilinear beam 28 that extends parallel to the longitudinal axis A of vertical upright 4, i.e. vertically, and is inserted in a telescopic manner in the central plate-like element 20, clearly on the opposite side with respect to the two rectilinear beams 26.

Likewise the oblong rigid framework 22, also the oblong rigid framework 24 preferably comprises, in addition to the rectilinear beam 28, an electrically- or hydraulically-operated, linear actuator 29 which is interposed between the central plate-like element 20 and the rectilinear beam 28, and is capable of axially moving the rectilinear beam 28, so as to vary at will the length of the segment of rectilinear beam 28 protruding cantilevered above the central plate-like element 20.

Additionally, with particular reference to Figures 1, 2, 3 and 4, in the example shown the gripping assembly 17 is preferably structured so as to grip all four lateral edges of the pack of glass sheets.

In other words, the gripping assembly 17 preferably also comprises a second fork-like structure 30 and a second a clamp-like gripping member 31 which are arranged on opposite sides of the central plate-like element 20, substantially coplanar and horizontally aligned with one another, and are fixed in rigid manner to the central plate-like element 20 so as to be able to move in the space together with the latter. Preferably, the distance of the fork-like structure 30 from the central plate-like element 20 and the distance of the clamp-like gripping member 31 from the central plate-like element 20 are moreover adjustable at will.

Clearly, the fork-like structure 30 is adapted to be arranged flush with one of the two vertical sides of the pack of glass sheets to be handled. The clamp-like gripping member 31, in turn, is adapted to clamp onto the second vertical side of the pack of glass sheets to be handled.

Preferably, the two fork-like structures 20 and 30 and the two clamp-like gripping members 23 and 31 thus lie on a same lying plane substantially perpendicular to the rotation axis R of gripping assembly 17, i.e. on a substantially vertical lying plane.

More specifically, in the example shown the fork-like structure 30 is preferably connected in rigid manner to the central plate-like element 20 via a third oblong rigid framework identical to the oblong rigid framework 22.

Similarly, the clamp-like gripping member 31 is preferably connected in rigid manner to the central plate-like element 20 via a fourth oblong rigid framework substantially identical to the oblong rigid structure 24.

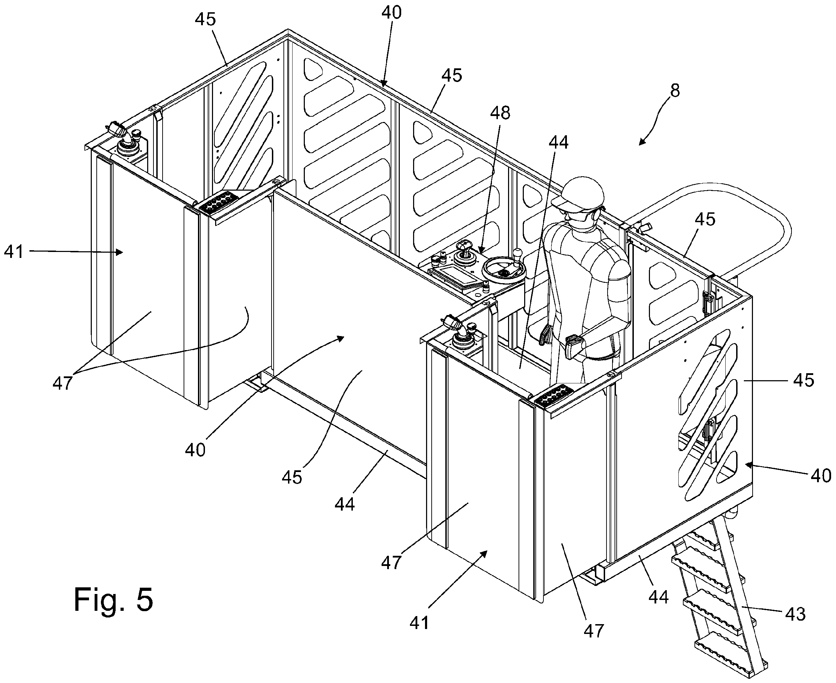

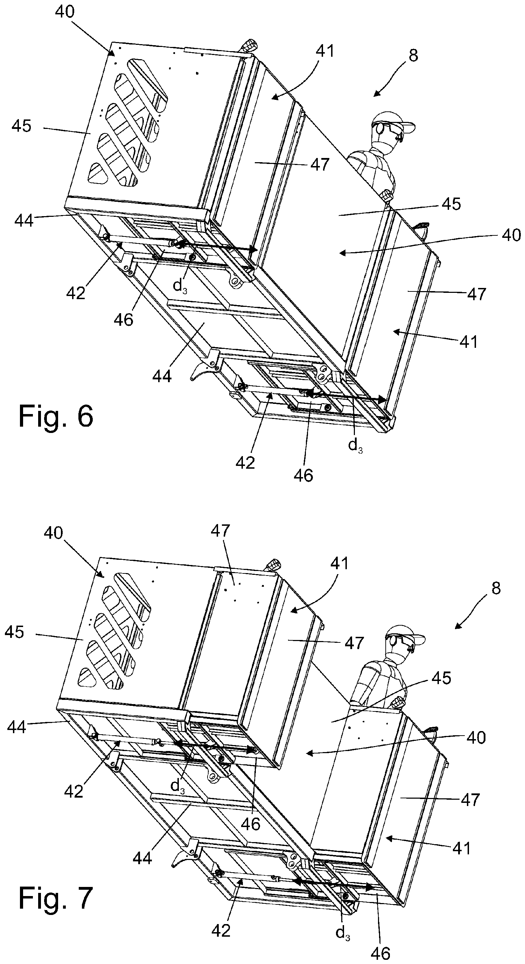

With reference to Figures 5, 6 and 7, the raised driver's cabin 8 in turn comprises: a main driver compartment 40, preferably substantially rectangular in shape and preferably open at the top, which is located above the gripping equipment 6, and is dimensioned to accommodate, at same time, two or more persons; and at least one retractable balcony/ledge 41 which is dimensioned to accommodate at least one person, and is fixed to the main driver compartment 40 with the capability of moving between a first operating position in which the retractable balcony 41 protrudes cantilevered from the main driver compartment 40 and can accommodate one person, and a second operating position in which the retractable balcony 41 is substantially entirely retracted/accommodated within the main driver compartment 40.

More specifically, the retractable balcony/ledge 41 is preferably movable horizontally with respect to the main driver compartment 40.

Additionally, the main driver compartment 40 preferably accommodates at least a part of the vehicle drive and command members, and has a walkable area preferably ranging between 3 and 8 m² (square metres).

The retractable balcony 41, in turn, has a walkable area smaller than that of the main driver compartment 40 and preferably ranging between 1 and 2 m² (square metres).

Preferably, also the retractable balcony 41 furthermore accommodates at least a part of the vehicle drive and command members necessary for driving the self-propelled vehicle 1.

In other words, the retractable balcony 41 is preferably dimensioned to accommodate one single person, and more specifically only the driver of the vehicle.

Clearly, some vehicle drive and/or command members can be duplicated and be preferably placed both in the main driver compartment 40 and in the retractable balcony 41.

Additionally, the driver's cabin 8 is preferably also provided with a preferably electrically- or hydraulically-operated, actuator device 42 that is capable of moving, on command, the retractable balcony/ledge 41 between the first and the second operating positions.

Preferably, the driver's cabin 8 moreover includes also a substantially rectilinear ladder 43 preferably with a self-supporting rigid structure, which extends cantilevered downwards from the main driver compartment 40, preferably with a given inclination angle with respect to the vertical. Preferably, the ladder 43 is furthermore dimensioned to remain always suspended above the supporting body 3.

More specifically, with reference to Figures 1, 2 and 3, the main driver compartment 40 is preferably located immediately above the vertical slide 16 of gripping equipment 6, so as to be adjacent to and facing the gripping assembly 17. Furthermore, the main driver compartment 40 is preferably also fixed in rigid manner to the top of the vertical slide 16 of gripping equipment 6.

The retractable balcony 41, in turn, preferably faces the gripping assembly 17 and, in the first operating position, juts out cantilevered from the main driver compartment 40 towards and optionally also beyond the lying plane of gripping assembly 17, i.e. the substantially vertical plane where the forked structure 20 and the clamp-like gripping member 23 and preferably also the fork-like structure 30 and the clamp-like gripping member 31 lie.

With reference to Figures 1, 2 and 3, additionally the main driver compartment 40 is preferably substantially elongated rectangular in shape, and is preferably arranged above the gripping equipment 6, with the two larger sides substantially perpendicular to the vehicle longitudinal axis L.

Preferably, the main driver compartment 40 is moreover centred astride of the vertical midplane of the vertical upright 4.

With reference to Figures 1, 2, 3, 5, 6 and 7, in the example shown, in particular, the driver's cabin 8 is preferably provided with two distinct retractable balconies/ ledges 41 that are preferably located along a same larger side of the main driver compartment 40, preferably on opposite sides of the vertical midplane of the main driver compartment 40 and/or of the vertical upright 4.

More specifically, the two retractable balconies 41 are preferably both placed along the front side of the main driver compartment 40, i.e. the side which directly faces the gripping assembly 17. Preferably, the two retractable balconies 41 are furthermore placed at the two ends of the front side of the main driver compartment 40.

In other words, the two retractable balconies/ledges 41 are preferably placed on opposite sides of the clamp-like gripping member 23 of gripping assembly 17 and/or of the oblong rigid framework 24 connecting the clamp-like gripping member 23 to the central plate-like element 20.

Preferably, the driver's cabin 8 is moreover also provided with an actuator device 42 for each retractable balcony 41.

With reference to Figures 5, 6 and 7, preferably the main driver compartment 40 finally has a basket structure.

More specifically, the main driver compartment 40 preferably comprises: a preferably substantially rectangular -shaped, rigid deck 44 which is arranged in a substantially horizontal position immediately above the vertical slide 16 of gripping equipment 6, and is preferably also fixed in rigid manner to the underlying vertical slide 16; and a safety parapet 45 that rises vertically from the perimeter edge of the rigid deck 44 up to a given height preferably ranging between 1 and 1,4 m (metres). The upper end of the ladder 43 is preferably fixed in rigid manner to a side of the rigid deck 44.

Preferably, the main driver compartment 40 is moreover fixed/connected to the vertical slide 16 of gripping equipment 6 so as to maintain the rigid deck 44 always substantially horizontal regardless of the inclination of vertical upright 4 with respect to the vertical.

More specifically, the main driver compartment 40 of the raised driver's cabin 8, or rather the rigid deck 44, is preferably fixed to the vertical slide 16 of gripping equipment 6 so as to rotate/swing about a reference axis substantially parallel to axis B, i.e. substantially horizontal and perpendicular to the midplane of the vehicle.

Additionally, the driver's cabin 8 is preferably also provided with a preferably electrically- or hydraulically-operated, adjustment assembly (not visible in the figures) which is preferably interposed between the main driver compartment 40 and the vertical slide 16, and is adapted to move/rotate, on command, the main driver compartment 40, or rather the rigid deck 44, about said reference axis, so as to maintain the rigid deck 44 substantially horizontal when the inclination angle of vertical upright 4 with respect to the vertical varies.

With reference to Figures 5, 6 and 7, the/each retractable balcony 41 of driver's cabin 8, in turn, is preferably located at an opening/interruption in the safety parapet 45, and preferably comprises: a preferably substantially rectangular-shaped, movable platform 46 which is inserted in the rigid deck 44 of the main driver compartment 40 with the capability of sliding horizontally between an extracted position in which the platform 46 juts out cantilevered and horizontally from the rigid deck 44 forming an extension of the latter, and a retracted position in which the platform 46 is substantially entirely recessed/ accommodate into the rigid deck 44; and a preferably substantially U-shaped, second safety parapet 47 that rises vertically from the movable platform 46 up to a given height preferably substantially identical to that of the safety parapet 45 of the main driver compartment 40, and preferably connects to the safety parapet 45 of main driver compartment 40 when platform 46 is in the extracted position.

More specifically, the platform 46 is preferably fixed to the rigid deck 44 of main driver compartment 40 with the capability of moving horizontally in a direction d₃ substantially perpendicular to the larger sides of rigid deck 44. The safety parapet 47, in turn, is preferably fixed in rigid manner only to the front edge of movable platform 46.

Clearly, the retractable balcony 41 is in the first operating position when the movable platform 46 is in the extracted position, and is in the second operating position when the movable platform 46 is in the retracted position.

The actuator device 42, in turn, preferably comprises a double-acting hydraulic cylinder that extends parallel to direction d₃ preferably beneath the rigid deck 44, and has the two ends fixed one to the rigid deck 44 and the other to the movable platform 46, so as to be able to move the movable platform 46 forwards and backwards with respect to rigid deck 44.

With reference to Figure 5, preferably the driver's cabin 8 is finally provided also with a movable control console 48 which accommodates at least a part of the vehicle drive and command members, and is mounted in slidable manner on a horizontal rail that extends along a segment of the safety parapet 45 of main driver compartment 40. Preferably, such segment of safety parapet 45 is furthermore delimited by the two retractable balconies/ledges 41.

Finally, the self-propelled vehicle 1 is preferably provided with an electronic control unit (not visible in the figures), which is connected to the vehicle drive and command members located in the driver's cabin 8, and is adapted to command the various aboard movable apparatuses in automatic manner and/or on the basis of the commands given directly by the driver of the vehicle via the vehicle drive and command members located in the driver's cabin 8.

More specifically, the electronic control unit is preferably adapted to control the motors of the ground-resting wheels 2, the actuator devices 5 and 7, the adjustment assembly 14, the various apparatuses of gripping equipment 6 (including the actuator device that rotates the gripping assembly 17 about the axis R) and/or the actuator device(s) 42.

The general operation of self-propelled vehicle 1 is easily inferable from what described above and does not require further explanations.

As regard instead the driver's cabin 8, the driver of the vehicle can, at his/her discretion, place the retractable balcony(ies)/ledge(s) 41 in the first operating position so as to have a better view of the front part of the self-propelled vehicle 1.

In addition, when it is necessary to rotate by 90° the pack of glass sheets, the driver of the vehicle can place the retractable balcony(ies)/ledge(s) 41 in the second operating position so as not to hinder rotation of the gripping assembly 17 about the axis R.

Preferably, the electronic control unit is furthermore programmed/configured to inhibit rotation of the gripping assembly 17 about axis R until the retractable balcony(ies)/ ledges 41 are in the first operating position.

Clearly, the vehicle electronic control unit may be additionally programmed/configured to automatically move the retractable balcony(ies)/ledge(s) 41 in the second operating position before rotating the gripping assembly 17 about axis R.

The advantages connected to the particular structure of the driver's cabin 8 are remarkable.

The presence of the retractable balcony(ies)/ledge(s) 41 greatly widens the view of the operator from the driver's cabin 8, making the driving of self-propelled vehicle 1 and the gripping of the packs of glass sheets simpler.

Thanks to the presence of the retractable balconies/ ledges 41, in fact, the driver of the vehicle can now arrive very close to the upper side of the pack of glass sheets to be handled, without dangerously leaning out of the driver's cabin 8, and thus can see up close the area where the clamp-like gripping member 23 clamps the pack of glass sheets.

Moreover, the capability of retracting the balconies/ ledges 41 prevents the balconies/ledges 41 from hindering rotation of the gripping assembly 17 of gripping equipment 6 about the axis R.

Additionally, the capability of retracting the balconies/ledges 41 increases the intrinsic safety of the vehicle, because it prevents the operator from finding himself/herself too close to the pack of glass sheets during rotation thereof, thus averting the risk of shearing/ pinching or other forms of accident that could prejudice the safety of the operator.

It is finally clear that modifications and variants can be made to the self-propelled vehicle 1 without thereby departing from the scope of the present invention.

For example, instead of being movable horizontally, the movable platform 46 of the or of each retractable balcony/ ledge 41 can be hinged to the rigid deck 44 so as to be able to fold upwards as a bascule bridge, against the safety parapet 45.

Otherwise, the movable platform 46 of the or of each retractable balcony/ledge 41 can be fan-shaped and be pivoted on rigid deck 44 so as to be able to rotate in a swivelling manner about a reference axis substantially perpendicular to the rigid deck 44, i.e. substantially vertical.

## Claims

1. A self-propelled vehicle (1) for handling packs of glass sheets of the type comprising: a supporting body (3) provided with a plurality of ground-resting wheels (2); a vertical upright (4) that extends cantilevered from the supporting body (3) in a substantially vertical direction, and is fixed to the supporting body (3) with the capability of moving horizontally and parallel to the vehicle longitudinal axis (L); a first actuator device (5) which is adapted to move, on command, the vertical upright (4) along the supporting body (3); a gripping equipment (6) which is adapted to grasp and hold, on command, a pack of glass sheets, and is fixed to the vertical upright (4) with the capability of moving vertically along the vertical upright (4); a second actuator device (7) which is adapted to move, on command, the gripping equipment (6) along the vertical upright (4); and a raised driver's cabin (8) which is adapted to accommodate the driver of the vehicle and is mounted movable on the vertical upright (4) above the gripping equipment (6);
wherein the driver's cabin (8) comprises: a main driver compartment (40) that is located above the gripping equipment (6) and is dimensioned to accommodate two or more persons;
the self-propelled vehicle (1) being **characterised in that** the driver's cabin further comprises at least one retractable balcony (41) which is fixed to the main driver compartment (40) with the capability of moving between a first operating position in which the retractable balcony (41) juts out cantilevered from the main driver compartment (40) and can accommodate one person, and a second operating position in which the retractable balcony (41) is substantially entirely accommodated inside the main driver compartment (40).

2. The self-propelled vehicle according to Claim 1, wherein the driver's cabin (8) additionally comprises a third actuator device (42) which is adapted to move, on command, said retractable balcony (41) between the first and the second operating position.

3. The self-propelled vehicle according to Claim 1 or 2, wherein the driver's cabin (8) is fixed in rigid manner to the gripping equipment (6) so as to be able to move along the vertical upright (4) together with said gripping equipment (6).

4. The self-propelled vehicle according to any one of the preceding claims, wherein the gripping equipment (6) comprises: a vertical slide (16) which is fixed to the vertical upright (4) with the capability of moving along the vertical upright (4) parallel to the upright longitudinal axis (A); and a gripping assembly (17) which is fixed to the vertical slide (16) so as to move along the vertical upright (4) together with the vertical slide (16), and is structured so as to be able to grasp and firmly hold, on command, a pack of glass sheets in a substantially vertical position.

5. The self-propelled vehicle according to Claim 4, wherein the main driver compartment (40) is located above the vertical slide (16) of the gripping equipment (6), so as to be adjacent to the gripping assembly (17).

6. The self-propelled vehicle according to Claim 5, wherein the retractable balcony (41) faces the gripping assembly (17) and, in the first operating position, juts out cantilevered from the main driver compartment (40) towards and optionally also beyond the gripping assembly (17).

7. The self-propelled vehicle according to Claim 4, 5 or 6, wherein the gripping assembly (17) is fixed to the vertical slide (16) with the capability of rotating about a reference axis (R) substantially perpendicular to the upright longitudinal axis (A); the gripping equipment (6) being additionally also provided with a fourth actuator device which is adapted to rotate, on command, the gripping assembly (17) around said reference axis (R).

8. The self-propelled vehicle according to Claim 7, wherein said fourth actuator device is adapted to rotate the gripping assembly (17) about the reference axis (R) by approximately 90° in a clockwise and/or anticlockwise direction, and then to bring the gripping assembly (17) back to the initial position.

9. The self-propelled vehicle according to Claim 7 or 8, **characterised by** additionally comprising an electronic control device that commands at least said fourth actuator device, and is programmed/configured so as to prevent rotation of the gripping assembly (17) when said at least one retractable balcony (41) is in the first operating position.

10. The self-propelled vehicle according to any one of the preceding claims, wherein the main driver compartment (40) is substantially elongated rectangular in shape, and is arranged above the gripping equipment (6) with the two larger sides substantially perpendicular to the vehicle longitudinal axis (L).

11. The self-propelled vehicle according to any one of the preceding claims, wherein the main driver compartment (40) has a basket structure.

12. The self-propelled vehicle according to any one of the preceding claims, wherein the driver's cabin (8) is provided with two distinct retractable balconies (41) that are placed along the same side of the main driver compartment (40).

13. The self-propelled vehicle according to Claim 10, wherein the two retractable balconies (41) are arranged on opposite sides of the vertical midplane of the main driver compartment (40) and/or of the vertical upright (4).

14. The self-propelled vehicle according to any one of the preceding claims, wherein the/each retractable balcony (41) is movable horizontally with respect to said main driver compartment (40).

15. The self-propelled vehicle according to any one of the preceding claims, wherein the main driver compartment (40) accommodates at least a part of the drive and command members of the vehicle.

16. The self-propelled vehicle according to any one of the preceding claims, wherein the/each retractable balcony (41) accommodates a part of the drive and command members of the vehicle.

17. The self-propelled vehicle according to any one of the preceding claims, wherein said first actuator device (5) is adapted to move, on command, the vertical upright (4) from and to a forward position in which the vertical upright (4) is located at the front edge of the supporting body (3); the gripping equipment (6) being fixed to the vertical upright (4) so as to protrude cantilevered towards the outside of the vehicle when the vertical upright (4) is in the forward position.

## Patentansprüche

1. Selbstfahrendes Fahrzeug zum Handhaben von Paketen von Glasscheiben der Bauart, welche Folgendes aufweist: einen Tragkörper (3), der mit einer Vielzahl von auf dem Boden ruhenden Rädern (2) versehen ist, einen vertikalen Ständer (4), der sich auskragend bzw. vorstehend von dem Tragkörper (3) in einer im Wesentlichen vertikalen Richtung und an dem Tragkörper (3) erstreckt, und zwar mit der Fähigkeit, sich horizontal und parallel zur Längsachse (L) des Fahrzeugs zu bewegen; eine erste Betätigungsvorrichtung (5), die ausgebildet ist, um auf einen Befehl hin den vertikalen Ständer (4) entlang des Tragkörpers (3) zu bewegen; eine Greifeinrichtung (6), die ausgebildet ist, um auf einen Befehl hin ein Paket von Glasscheiben zu ergreifen und zu halten, und die an dem vertikalen Ständer (4) befestigt ist und zwar mit der Fähigkeit, sich vertikal entlang des vertikalen Ständers (4) zu bewegen; eine zweite Betätigungsvorrichtung (7), die ausgebildet ist, um auf einen Befehl hin die Greifeinrichtung (6) entlang des vertikalen Ständers (4) zu bewegen; und eine angehobene Fahrerkabine (8), die ausgebildet ist, um den Fahrer des Fahrzeugs aufzunehmen, und die bewegbar an dem vertikalen Ständer (4) über der Greifeinrichtung (6) befestigt ist;
wobei die Fahrerkabine (8) Folgendes aufweist: ein Hauptfahrerabteil (40), welches über der Greifeinrichtung (6) angeordnet ist und bemessen ist, um zwei oder mehr Personen aufzunehmen;
wobei das selbstfahrende Fahrzeug (1) **dadurch gekennzeichnet ist, dass** die Fahrerkabine weiter Folgendes aufweist:
zumindest einen einfahrbaren Balkon (41), der an dem Hauptfahrerabteil (40) befestigt ist, und zwar mit der Fähigkeit, sich zwischen einer ersten Betriebsposition, in welcher der einfahrbare Balkon (41) auskragend bzw. vorstehend von dem Hauptfahrerabteil (40) vorsteht und eine Person aufnehmen kann, und einer zweiten Betriebsposition zu bewegen, in welcher der einfahrbare Balkon (41) im Wesentlichen vollständig innerhalb des Hauptfahrerabteils (40) aufgenommen ist.

2. Selbstfahrendes Fahrzeug nach Anspruch 1, wobei die Fahrerkabine (8) zusätzlich eine dritte Betätigungsvorrichtung (42) aufweist, die ausgebildet ist, um auf einen Befehl hin den einfahrbaren Balkon (41) zwischen der ersten und der zweiten Betriebsposition zu bewegen.

3. Selbstfahrendes Fahrzeug nach Anspruch 1 oder 2, wobei die Fahrerkabine (8) in starrer Weise an der Greifeinrichtung (6) befestigt ist, so dass sie fähig ist, sich entlang des vertikalen Ständers (4) zusammen mit der Greifeinrichtung (6) zu bewegen.

4. Selbstfahrendes Fahrzeug nach einem der vorhergehenden Ansprüche, wobei die Greifeinrichtung (6) Folgendes aufweist: einen vertikalen Schlitten (16), der an dem vertikalen Ständer (4) befestigt ist, und zwar mit der Fähigkeit, sich entlang des vertikalen Ständers (4) parallel zu der Längsachse (A) des Ständers zu bewegen; und eine Greifanordnung (17), die an dem vertikalen Schlitten (16) befestigt ist, so dass sie sich entlang des vertikalen Ständers (4) zusammen mit dem vertikalen Schlitten (16) bewegt, und die so strukturiert ist, dass sie fähig ist, auf einen Befehl hin, ein Paket von Glasscheiben in einer im Wesentlichen vertikalen Position zu ergreifen und festzuhalten.

5. Selbstfahrendes Fahrzeug nach Anspruch 4, wobei das Hauptfahrerabteil (40) über dem vertikalen Schlitten (16) der Greifeinrichtung (6) angeordnet ist, so dass es benachbart zur Greifanordnung (17) ist.

6. Selbstfahrendes Fahrzeug nach Anspruch 5, wobei der einfahrbare Balkon (41) zu der Greifanordnung (17) weist, und wobei er in der ersten Betriebsposition vorstehend von dem Hauptfahrerabteil (40) zu der Greifanordnung (17) hin und optional auch über diese hinaus vorsteht.

7. Selbstfahrendes Fahrzeug nach Anspruch 4, 5 oder 6, wobei die Greifanordnung (17) an dem vertikalen Schlitten (16) befestigt ist, und zwar mit der Fähigkeit, sich um eine Referenzachse (R) zu drehen, die im Wesentlichen senkrecht zu der Längsachse (A) des Ständers ist; wobei die Greifeinrichtung (6) zusätzlich auch mit einer vierten Betätigungsvorrichtung versehen ist, die ausgebildet ist, um auf einen Befehl hin die Greifanordnung (17) um die Referenzachse (R) zu drehen.

8. Selbstfahrendes Fahrzeug nach Anspruch 7, wobei die vierte Betätigungsvorrichtung ausgebildet ist, um die Greifanordnung (17) um die Referenzachse (R) um ungefähr 90° in einer Richtung im Uhrzeigersinn und/oder gegen den Uhrzeigersinn zu drehen und dann die Greifanordnung (17) zurück in die Anfangsposition zu bringen.

9. Selbstfahrendes Fahrzeug nach Anspruch 7 oder 8, **dadurch gekennzeichnet, dass** es zusätzlich eine elektronische Steuervorrichtung aufweist, die zumindest die vierte Betätigungsvorrichtung anweist bzw. mit Befehlen versorgt, und so programmiert/konfiguriert ist, dass sie eine Drehung der Greifanordnung (17) verhindert, wenn der mindestens eine einfahrbare Balkon (41) in der ersten Betriebsposition ist.

10. Selbstfahrendes Fahrzeug nach einem der vorhergehenden Ansprüche, wobei das Hauptfahrerabteil (40) im Wesentlichen langgestreckt und rechteckig geformt ist und über der Greifeinrichtung (6) angeordnet ist, wobei die zwei größeren Seiten im Wesentlichen senkrecht zur Längsachse (L) des Fahrzeugs sind.

11. Selbstfahrendes Fahrzeug nach einem der vorhergehenden Ansprüche, wobei das Hauptfahrerabteil (40) eine Korbstruktur hat.

12. Selbstfahrendes Fahrzeug nach einem der vorhergehenden Ansprüche, wobei die Fahrerkabine mit zwei getrennten einfahrbaren Balkonen (41) versehen ist, die entlang der gleichen Seite des Hauptfahrerabteils (40) angeordnet sind.

13. Selbstfahrendes Fahrzeug nach Anspruch 10, wobei die zwei einfahrbaren Balkone (41) an gegenüberliegenden Seiten der vertikalen Mittelebene des Hauptfahrerabteils (40) und/oder des vertikalen Ständers (4) angeordnet sind.

14. Selbstfahrendes Fahrzeug nach einem der vorhergehenden Ansprüche, wobei der/jeder einfahrbare Balkon (41) horizontal bezüglich des Hauptfahrerabteils (40) bewegbar ist.

15. Selbstfahrendes Fahrzeug nach einem der vorhergehenden Ansprüche, wobei das Hauptfahrerabteil (40) zumindest einen Teil der Antriebs- und Befehlselemente des Fahrzeugs aufnimmt.

16. Selbstfahrendes Fahrzeug nach einem der vorhergehenden Ansprüche, wobei der/jeder einfahrbare Balkon (41) einen Teil der Antriebs- und Befehlselemente des Fahrzeugs aufnimmt.

17. Selbstfahrendes Fahrzeug nach einem der vorhergehenden Ansprüche, wobei die erste Betätigungsvorrichtung (5) ausgebildet ist, um auf einen Befehl hin den vertikalen Ständer (4) aus einer und in eine Vorwärtsposition zu bewegen, in welcher der vertikale Ständer (4) an der vorderen Kante des Tragkörpers (3) angeordnet ist; wobei die Greifeinrichtung (6) an dem vertikalen Ständer (4) so befestigt ist, dass sie auskragend bzw. vorstehend zu der Außenseite des Fahrzeugs vorsteht, wenn der vertikale Ständer (4) in der vorderen Position ist.

## Revendications

1. Véhicule automoteur (1) pour la manutention de paquets de feuilles de verre du type comprenant : un corps de support (3) muni de plusieurs roues (2) reposant sur le sol ; un montant vertical (4) qui s'étend en porte-à-faux à partir du corps de support (3) dans une direction sensiblement verticale, et qui est fixé au corps de support (3) avec la capacité de se déplacer horizontalement et parallèlement à l'axe longitudinal du véhicule (L) ; un premier dispositif d'actionnement (5) qui est adapté pour déplacer, sur commande, le montant vertical (4) le long du corps de support (3) ; un équipement de préhension (6) adapté pour saisir et maintenir, sur commande, un paquet de feuilles de verre, et fixé au montant vertical (4) avec la capacité de se déplacer verticalement le long du montant vertical (4) ; un deuxième dispositif d'actionnement (7) qui est adapté pour déplacer, sur commande, l'équipement de préhension (6) le long du montant vertical (4) ; et une cabine de conduite (8) surélevée qui est adaptée pour accueillir le conducteur du véhicule et montée mobile sur le montant vertical (4) au-dessus de l'équipement de préhension (6) ;
dans lequel la cabine de conduite (8) comprend : un compartiment conducteur principal (40) qui est situé au-dessus de l'équipement de préhension (6) et qui est dimensionné pour accueillir deux personnes ou plus ;
le véhicule automoteur (1) étant **caractérisé en ce que** la cabine de conduite comprend en outre
au moins un balcon rétractable (41) fixé au compartiment principal du conducteur (40) et pouvant se déplacer entre une première position de fonctionnement dans laquelle le balcon rétractable (41) est en porte-à-faux par rapport au compartiment conducteur principal (40) et peut accueillir une personne, et une deuxième position de fonctionnement dans laquelle le balcon rétractable (41) est presque entièrement logé à l'intérieur du compartiment conducteur principal (40).

2. Véhicule automoteur selon la revendication 1, dans lequel la cabine de conduite (8) comprend en outre un troisième dispositif d'actionnement (42) qui est adapté pour déplacer, sur commande, ledit balcon rétractable (41) entre la première et la deuxième position de fonctionnement.

3. Véhicule automoteur selon la revendication 1 ou 2, dans lequel la cabine de conduite (8) est fixée de manière rigide à l'équipement de préhension (6) de manière à pouvoir se déplacer le long du montant vertical (4) avec ledit équipement de préhension (6).

4. Véhicule automoteur selon l'une quelconque des revendications précédentes, dans lequel l'équipement de préhension (6) comprend : une glissière verticale (16) qui est fixée au montant vertical (4) avec la capacité de se déplacer le long du montant vertical (4) parallèlement à l'axe longitudinal du montant (A) ; et un ensemble de préhension (17) qui est fixé à la glissière verticale (16) de manière à se déplacer le long du montant vertical (4) avec la glissière verticale (16), et qui est structuré de manière à pouvoir saisir et maintenir fermement, sur commande, un paquet de feuilles de verre dans une position sensiblement verticale.

5. Véhicule automoteur selon la revendication 4, dans lequel le compartiment conducteur principal (40) est situé au-dessus de la glissière verticale (16) de l'équipement de préhension (6), de manière à être adjacent à l'ensemble de préhension (17).

6. Véhicule automoteur selon la revendication 5, dans lequel le balcon rétractable (41) fait face à l'ensemble de préhension (17) et, dans la première position de fonctionnement, s'avance en porte-à-faux depuis le compartiment conducteur principal (40) en direction de l'ensemble de préhension (17) et éventuellement au-delà de celui-ci.

7. Véhicule automoteur selon la revendication 4, 5 ou 6, dans lequel l'ensemble de préhension (17) est fixé à la glissière verticale (16) avec la capacité de tourner autour d'un axe de référence (R) sensiblement perpendiculaire à l'axe longitudinal du montant (A) ; l'équipement de préhension (6) étant en outre également pourvu d'un quatrième dispositif d'actionnement qui est adapté pour faire tourner, sur commande, l'ensemble de préhension (17) autour de l'axe de référence (R).

8. Véhicule automoteur selon la revendication 7, dans lequel ledit quatrième dispositif d'actionnement est adapté pour faire tourner l'ensemble de préhension (17) autour de l'axe de référence (R) d'environ 90° dans le sens des aiguilles d'une montre et/ou dans le sens inverse des aiguilles d'une montre, puis pour ramener l'ensemble de préhension (17) dans la position initiale.

9. Véhicule automoteur selon la revendication 7 ou 8, **caractérisé en ce qu'**il comprend en outre un dispositif de commande électronique qui commande au moins ledit quatrième dispositif d'actionnement, et qui est programmé/configuré de manière à empêcher la rotation de l'ensemble de préhension (17) lorsque ledit au moins un balcon rétractable (41) est dans la première position de fonctionnement.

10. Véhicule automoteur selon l'une quelconque des revendications précédentes, dans lequel le compartiment conducteur principal (40) est de forme sensiblement rectangulaire allongée, et est disposé au-dessus de l'équipement de préhension (6) avec les deux plus grands côtés sensiblement perpendiculaires à l'axe longitudinal du véhicule (L).

11. Véhicule automoteur selon l'une quelconque des revendications précédentes, dans lequel le compartiment conducteur principal (40) présente une structure de panier.

12. Véhicule automoteur selon l'une quelconque des revendications précédentes, dans lequel la cabine du conducteur (8) est pourvue de deux balcons rétractables distincts (41) qui sont placés le long du même côté du compartiment conducteur principal (40).

13. Véhicule automoteur selon la revendication 10, dans lequel les deux balcons rétractables (41) sont disposés sur des côtés opposés du plan médian vertical du compartiment conducteur principal (40) et/ou du montant vertical (4).

14. Véhicule automoteur selon l'une quelconque des revendications précédentes, dans lequel le/chaque balcon rétractable (41) est mobile horizontalement par rapport audit compartiment conducteur principal (40).

15. Véhicule automoteur selon l'une quelconque des revendications précédentes, dans lequel le compartiment conducteur principal (40) accueille au moins une partie des organes d'entraînement et de commande du véhicule.

16. Véhicule automoteur selon l'une quelconque des revendications précédentes, dans lequel le/chaque balcon rétractable (41) accueille une partie des organes d'entraînement et de commande du véhicule.

17. Véhicule automoteur selon l'une quelconque des revendications précédentes, dans lequel ledit premier dispositif d'actionnement (5) est adapté pour déplacer, sur commande, le montant vertical (4) de et vers une position avant dans laquelle le montant vertical (4) est situé au bord avant du corps de support (3) ; l'équipement de préhension (6) étant fixé au montant vertical (4) de manière à faire saillie en porte-à-faux vers l'extérieur du véhicule lorsque le montant vertical (4) est dans la position avant.
